(19) **Europäisches Patentamt / European Patent Office / Office européen des brevets**

(11) **EP 2 746 307 B1**

(12) **EUROPEAN PATENT SPECIFICATION**

(45) Date of publication and mention
of the grant of the patent:
**01.07.2015 Bulletin 2015/27**

(51) Int Cl.:
***C08F 214/22*** *(2006.01)*    ***C08J 9/18*** *(2006.01)*
***C08L 27/16*** *(2006.01)*

(21) Application number: **13197140.0**

(22) Date of filing: **13.12.2013**

(54) **Polyvinylidene fluoride resin expanded beads, method for producing polyvinylidene fluoride resin expanded beads, and molded articles of polyvinylidene fluoride resin expanded beads**

Polyvinylidenfluoridharzkügelchen, Verfahren zur Herstellung von expandierten Polyvinylidenfluoridharzkügelchen und geformte Gegenstände aus expandierten Polyvinylidenfluoridharzkügelchen

Billes expansées de résine de fluorure de polyvinylidène, procédé de production de telles billes et articles moulés à base desdites billes

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.12.2012 JP 2012277245**

(43) Date of publication of application:
**25.06.2014 Bulletin 2014/26**

(73) Proprietor: **JSP CORPORATION**
**Tokyo 100-0005 (JP)**

(72) Inventors:
• **Shinohara, Mitsuru**
  **Mie, 510-0881 (JP)**

• **Oikawa, Masaharu**
  **Mie, 510-0881 (JP)**

(74) Representative: **Wagner, Matthias**
**Müller-Gerbes Wagner Albiger**
**Patentanwälte mbB**
**Siegfried-Leopold-Strasse 27**
**53225 Bonn (DE)**

(56) References cited:
**EP-A1- 2 407 504**    **WO-A2-91/14724**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND

Technical Field

The present invention relates to polyvinylidene fluoride resin expanded beads, a method for producing the polyvinylidene fluoride resin expanded beads, and a molded article of the polyvinylidene fluoride resin expanded beads.

Related Art

Polyvinylidene fluoride resins are used as non-contaminating materials for members used in clean rooms and parts of high-performance analysis devices. In addition, since polyvinylidene fluoride resins have excellent weather resistance, they are also used for exterior-quality paints. Moreover, polyvinylidene fluoride resins are also excellent in fire retardancy and are also used for fire-retardant uses.

As an example of a polyvinylidene fluoride resin foam, a foam obtained by subjecting a polyvinylidene fluoride resin as a raw material to a crosslinking treatment, kneading a heat-decomposition type blowing agent that can be decomposed at the melting temperature of the raw material resin into the crosslinking-treated raw material, molding the resin into a sheet, a plate, a rod, and foaming the molded article by heating, has been known. Moreover, a method of incorporating a blowing agent into a polyvinylidene fluoride resin as a raw material without subjecting the raw material to a crosslinking treatment, molding the obtained resin into a sheet, a plate, a rod and foaming the molded article by a heating treatment to obtain a foamed articles, have been known.

For example, JP 7-11037 A discloses a method for obtaining a foamed article in such a manner that a chemical blowing agent is kneaded into a raw material resin obtained by electron beam crosslinking of a polyvinylidene fluoride resin, the kneaded resin is molded into a sheet, and the molded article is heated to decompose the blowing agent, followed by foaming. However, only a sheet-like foam that has been molded into a sheet-like shape in advance can be obtained by this method, and the degree of freedom for the shape of a foam obtained by this method is poor.

Furthermore, JP 7-26051 A discloses a foam of a sheet-like shape made of a thermoplastic fluorine resin having no crosslinked structure. However, also in JP 7-26051 A, the obtained foam is sheet-like, and the degree of freedom for the shape of a foam is poor.

To address this circumstance, the present applicants have developed polyvinylidene fluoride resin expanded beads as disclosed in JP 2010-209224 A, for polyvinylidene fluoride resin expanded beads that can be molded by in-mold molding.

SUMMARY

The polyvinylidene fluoride resin expanded beads disclosed in JP 2010-209224 A are expanded beads which can be molded by in-mold molding. By in-mold molding of the expanded beads, it is possible to obtain a molded article of the ex paded beads having excellent appearance and mechanical properties. However, when expanded beads having a high expansion ratio are used for producing a molded article having a high expansion ratio, the expanded beads disclosed in JP 2010-209224 A shrink easily.

Accordingly, the density of the expanded beads needs to be managed minutely and there are various problems to be improved in the expanded beads disclosed in JP 2010-209224 A, in view of productivity. Moreover, when the molded article of the expanded beads obtained by in-mold molding of the expanded beads is produced to have a high foaming ratio, the shrinkage thereof occurs easily and thus problems are left yet in view of mold reproducibility or dimensional stability.

The present invention was made in consideration of the above-described problems, and an object thereof is to provide polyvinylidene fluoride resin expanded beads which have a high expansion ratio and do not shrink easily and by which a molded article of the expanded beads having excellent mold reproducibility and dimensional stability can be produced, a method for producing the polyvinylidene fluoride resin expanded beads, and a molded article of the polyvinylidene fluoride resin expanded beads obtained by in-mold molding of the polyvinylidene fluoride resin expanded beads.

As a result of further studies on the above-described problems, it is found that the above-described object can be achieved by expanded beads to be described below.

That is, the present invention provides the following [1] to [8].

[1] polyvinylidene fluoride resin expanded beads comprising a polyvinylidene fluoride resin as a base resin, in which a flexural modulus of the polyvinylidene fluoride resin is 450 MPa or more, a melt flow rate (MFR) of the polyvinylidene fluoride resin is 1 g/10 min or more at 230°C and 2.16 kg load, an apparent density of the expanded beads is 25 to 150 g/L, and a closed cell content of the expanded beads is 80% or more.

[2] The polyvinylidene fluoride resin expanded beads described in [1], in which a DSC curve that is measured when the expanded beads are heated from 30°C to 200°C at a heating rate of 10°C/min by a heat flux differential scanning calorimetry (a DSC curve of the first heating) has a crystalline structure in which an endothermic peak that is inherent in the polyvinylidene fluoride resin (inherent peak) and one or more endothermic peaks (high-temperature peaks) on the higher-temperature side than the inherent peak appear, and the DSC curve of the first heating satisfies the condition of the following formula (1),

$$0.05 \leq Eh/Et \leq 0.25 \ ... \ (1)$$

(In the formula, Et represents the total calorific value (J/g) of the endothermic peaks of the inherent peak and the high-temperature peaks on the DSC curve of the first heating, and Eh represents the calorific value (J/g) of the high-temperature peaks.)

[3] The polyvinylidene fluoride resin expanded beads described in [1], in which the flexural modulus of the polyvinylidene fluoride resin is 500 to 1200 MPa.

[4] The polyvinylidene fluoride resin expanded beads described in [1], in which the melt flow rate of the polyvinylidene fluoride resin is 1.5 to 15 g/10 min at 230°C and 2.16 kg load.

[5] The polyvinylidene fluoride resin expanded beads described in [2], wherein the calorific value of the high-temperature peaks is 2 to 30 J/g.

[6] A method for producing polyvinylidene fluoride resin expanded beads having an apparent density of 25 to 150 g/L and a closed cell content of 80% or more comprising :dispersing resin beads, which include, as a base resin, a polyvinylidene fluoride resin having a flexural modulus of 450 MPa or more and a melt flow rate (MFR) of 1 g/10 min or more at 230°C and 2.16 kg load, in dispersing medium in a closed vessel and heating the resin beads; impregnating the resin beads with a blowing agent under pressure to obtain expandable resin beads; and discharging the expandable resin beads together with the dispersing medium from the closed vessel to a low pressure area which is lower than the pressure in the closed vessel.

[7] A molded article of polyvinylidene fluoride resin expanded beads, which is obtained by molding of the expanded beads described in [1] to [5].

The polyvinylidene fluoride resin expanded beads of the present invention, which comprise polyvinylidene fluoride resin having a specific property as a base resin, do not shrink easily even when the expanded beads has a high expansion ratio with a low apparent density, and thus is excellent in in-mold moldability.

Furthermore, although the molded article of obtained by in-mold molding of the expanded beads has a high expansion ratio with a low apparent density, the shrinkage of the molded article is small and the molded article is excellent in reproducibility of a mold shape as well as dimensional stability.

BRIEF DESCRIPTION OF DRAWING

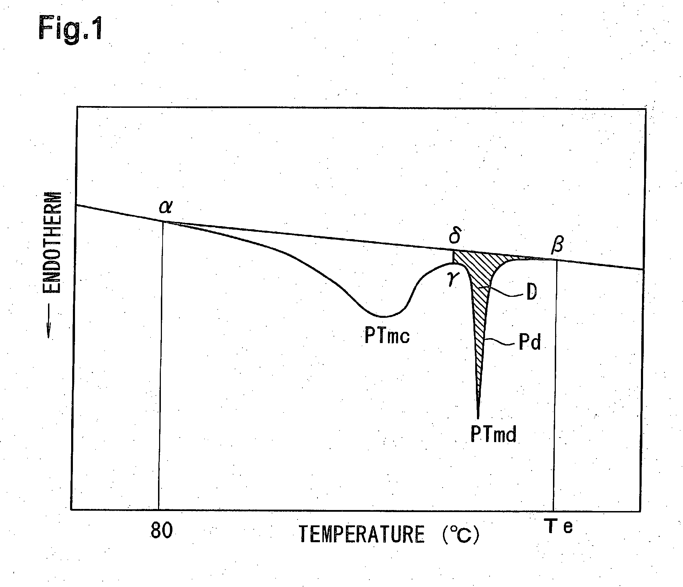

FIG. 1 is a diagram showing a representative example of a DSC curve that is measured when expanded beads according to the present invention are heated from 30°C to 200°C at a heating rate of 10°C/min by a heat flux differential scanning calorimetry (a DSC curve of the first heating).

DETAILED DESCRIPTION

The present invention relates to polyvinylidene fluoride resin expanded beads including a polyvinylidene fluoride resin as a base resin, and a method for producing the same.

In the polyvinylidene fluoride resin expanded beads of the present invention, a flexural modulus of the polyvinylidene fluoride resin is 450 MPa or more and a melt flow rate (MFR) of the resin is 1 g/10 min or more at 230°C and 2.16 kg load.

An apparent density of the expanded beads is 25 to 150 g/L, and a closed cell content of the expanded beads is 80% or more.

It is preferable that the polyvinylidene fluoride resin expanded beads of the present invention be produced by a method of dispersing resin beads which comprise the polyvinylidene fluoride resin as a base resin in dispersing medium in a closed vessel and heating the resin beads, impregnating the resin beads with a blowing agent to obtain expandable resin beads, and then discharging the expandable resin beads together with the dispersing medium from the closed vessel to a low pressure area which is lower than the pressure in the closed vessel.

In the present invention, polyvinylidene fluoride resin expanded beads are sometimes referred to as "expanded beads". A molded article of the polyvinylidene fluoride resin expanded beads obtained by in-mold molding of the expanded beads is sometimes referred to as a "molded article of the expanded beads" or a "molded article". Furthermore, a DSC curve obtained by a heat flux differential scanning calorimetry is sometimes referred to as a "DSC curve".

The polyvinylidene fluoride resin that is a base resin composing the expanded beads of the present invention is a vinylidene fluoride homopolymer or a copolymer of vinylidene fluoride and another monomer. Moreover, the copolymer includes a copolymer having vinylidene fluoride as a main component.

As used herein, the matter that vinylidene fluoride is used as a main component means that the vinylidene fluoride component included in the copolymer is at least 50% by weight or more, and preferably 70% by weight or more. Furthermore, examples of another monomer include tetrafluoroethylene and hexafluoropropylene.

The polyvinylidene fluoride resin needs to satisfy both of the requirement of the flexural modulus and the requirement of the melt flow rate. The melt flow rate is one of important properties relating to easy stretching of the base resin at during of foaming, that is, the growth of cells in the case of obtaining the expanded beads having a low apparent density.

Meanwhile, the flexural modulus is one of important properties relating to the strength of the cell membranes of the expanded beads.

Therefore, when any one of the requirement of the flexural modulus and the requirement of the melt flow rate does not satisfy the above-described requirement, there is a concern in that it is not possible to obtain expanded beads having an apparent density of 25 to 150 g/L that do not shrink easily, which is an intended purpose of the present invention. Moreover, when the expanded beads that do not satisfy the both of the requirement of the flexural modulus and the requirement of the melt flow rate are used, there is a concern in that it is not possible to obtain a foamed article which is excellent in dimensional stability, reproducibility of the mold shape.

The flexural modulus of the polyvinylidene fluoride resin is at least 450 MPa or more. When the flexural modulus is too small, in the case of obtaining expanded beads having particularly high expansion ratio, that is, expanded beads having a low apparent density, there is a concern in that cells are integrated with each other or the cells break in the process of growing fine cells in the beads during of expanding. Alternatively, although the expanded beads having a high expansion ratio can be obtained, the cell membrane in the beads is not likely to stretched and oriented during of expanding. As a result, after expanding, variation in the pressure in cells of the expanded beads occurs according to the loss of the blowing agent or variation in surrounding temperature. Therefore, the expanded beads shrink easily and variation in the apparent density of the expanded beads increases. According to this, there is a concern in that it is difficult to control the apparent density of the expanded beads. In addition, there is a concern in that the molded article of the expanded beads having excellent mold reproducibility and dimensional stability cannot be obtained from the expanded beads which do not satisfy the above-described flexural modulus. The upper limit of the flexural modulus of the polyvinylidene fluoride resin is approximately 1300 MPa. From the above viewpoint, the flexural modulus of the polyvinylidene fluoride resin is preferably 500 to 1200 MPa, and more preferably 600 to 1100 MPa. The flexural modulus can be measured according to JIS K 7171.

The melt flow rate (MFR) of the polyvinylidene fluoride resin is 1 g/10 min or more (temperature: 230°C, load: 2.16 kg). When the melt flow rate is too low, stress concentration occurs locally during of expanding the resin beads and thus the expanded beads are easily to be formed open cell. Therefore, it is difficult to obtain expanded beads that have a low apparent density and do not shrink easily. Meanwhile, although not particularly limited, the upper limit of the melt flow rate is approximately 20 g/10 min from the viewpoint of preventing the cells from being integrated with each other or the cells from breaking. The melt flow rate is more preferably 1.5 to 15 g/10 min. Incidentally, the melt flow rate (MFR) can be measured under the test conditions (temperature: 230°C, load: 2.16 kg) based on ASTM D1238.

The polyvinylidene fluoride resin that is a base resin composing the foamed polyvinylidene fluoride resin beads in the present invention preferably includes a vinylidene fluoride copolymer containing hexafluoropropylene as a copolymerizable monomer component.

Furthermore, from the viewpoint of satisfying the above-described flexural modulus, the copolymer is preferably a copolymer containing a hexafluoropropylene component in an amount of 3% by weight to 14% by weight as a copolymerizable monomer component. Moreover, from the above viewpoint, the upper limit of the content of the hexafluoropropylene component in the copolymer is preferably 12% by weight, and more preferably 11% by weight.

Examples of the polyvinylidene fluoride resin which satisfies the above-described requirements include Solef 20808, Solef 11008, Solef 11010 commercially supplied from Solvay Solexis.

The polyvinylidene fluoride resin may be a non-crosslinked polyvinylidene fluoride resin or a crosslinked polyvinylidene fluoride resin that is crosslinked by a conventionally known method. However, in view of recyclability, productivity of the expanded beads, a non-crosslinked polyvinylidene fluoride resin is preferable. Moreover, the polyvinylidene fluoride resin may be a mixture of two or more kinds of polyvinylidene fluoride resins. The density of the polyvinylidene fluoride resin is approximately 1.7 to 1.9 g/cm$^3$.

Other polymer components and additives other than the polyvinylidene fluoride resin can be added to the expanded beads of the present invention to the extent that the effects of the present invention are not deteriorated.

Examples of the other polymer components include polyolefin resins such as high density polyethylenes, medium density polyethylenes, low density polyethylenes, linear very-low density polyethylenes, linear low density polyethylenes, ethylene-vinyl acetate copolymers, ethylene-acrylic acid copolymers, ethylene-methacrylic acid copolymers, and polypropylene resins, or polystyrene resins such as polystyrene, styrene-maleic anhydride copolymers, styrene-acrylic acid copolymers, and styrene-methacrylic acid copolymers, rubbers such as ethylene-propylene rubbers, ethylene-1-butene rubbers, propylene-1-butene rubbers, ethylene-propylene-diene rubbers, isoprene rubbers, neoprene rubbers and nitrile rubbers, styrene thermoplastic elastomers such as styrene-diene block copolymers and hydrogenated products of styrene-diene block copolymers, polytetrafluoroethylenes, tetrafluoroethylene-perfluoroalkoxyethylene copolymers, tetrafluoroethylene-hexafluoropropylene copolymers, tetrafluoroethylene-ethylene copolymers, polytrifluoroethylenes, trifluoroethylene-ethylene copolymers, and mixtures thereof. The amount of the Polyvinylidene fluoride is preferably at least 50% by weight, more preferably at least 70% by weight, still more preferably at least 90% by weight.

In the expanded beads of the present invention, it is preferable that a DSC curve that is measured when 1 to 3 mg of the expanded beads are heated from 30°C to 200°C at a heating rate of 10°C/min by a heat flux differential scanning calorimetry (a DSC curve of the first heating) have a crystalline structure in which an endothermic peak that is inherent in the polyvinylidene fluoride resin (inherent peak) and one or more endothermic peaks (high-temperature peaks) on the higher-temperature side than the inherent peak appear. Moreover, the calorific value of high-temperature peaks observed on the DSC curve of the first heating is preferably 2 J/g or more. When the calorific value of high-temperature peaks is within the above range, the expanded beads having a low apparent density may be obtained more easily. In addition, the upper limit of the calorific value of high-temperature peaks is approximately 30 J/g from the viewpoint of the secondary foamability of the expanded beads during molding in the mold. Moreover, in consideration of the secondary foamability of the expanded beads and the fusion-bonding property between the expanded beads, the calorific value of the high-temperature peaks is preferably 2.5 to 15 J/g, and more preferably 3 to 10 J/g.

When two or more high-temperature peaks appear, the calorific value of high-temperature peaks means the total calorific value of all of the high-temperature peaks. The calorific value of high-temperature peaks can be adjusted by operation of holding temperature in the production of the expanded beads which is described later.

The method for measuring the calorific value of high-temperature peaks of the expanded beads in the present invention will be described by FIG. 1. In the DSC curve that is measured when 1 to 3 mg of the expanded beads are heated from 30°C to 200°C at a heating rate of 10°C/min (a DSC curve of the first heating) by a heat flux differential scanning calorimetry, an inherent peak Pc having a peak temperature PTmc that is inherent in the polyvinylidene fluoride resin appears. Furthermore, one or more endothermic peaks Pd (high-temperature peaks Pd) each having a peak temperature PTmd appear on the high-temperature side temperature area of the inherent peak.

The high-temperature peak Pd appears on the DSC curve of the first heating measured as described above. However, the high-temperature peak does not appear on the DSC curve of the second heating that is measured by cooling from 200°C to about 30°C at a cooling rate of 10°C/min and heating again to 200°C at a heating rate of 10°C/min after the DSC curve of the first heating is measured. Since only an endothermic peak (inherent peak) that is inherent in the polyvinylidene fluoride resin appears on the DSC curve of the second heating, the inherent peak and the high-temperature peak can be readily distinguished.

The calorific value of the high-temperature peak is calculated by a heat flux differential scanning calorimetry in such a manner that an area (D) of the high-temperature peak Pd is defined. For example, the area of the high-temperature peak Pd can be defined as follows.

As illustrated in FIG. 1, the straight line α-β that connects the point α corresponding to 80°C on the DSC curve and the point β corresponding to the melt end temperature Te of the expanded beads is drawn. Next, a straight line that is in parallel to the vertical axis of the graph is drawn from the point γ on the DSC curve which corresponds to the valley portion between the inherent peak Pc and the high-temperature peak Pd, and the intersection with the straight line α-β is defined as 8. The area (D) of the high-temperature peak Pd is defined as an area of the part that is surrounded by the DSC curve representing the high-temperature peak Pd of the DSC curve, the line segment δ-β and the line segment γ-δ (the part (D) represented by hatched lines in FIG. 1). In addition, the reason why the point α on the DSC curve is defined as a point corresponding to a temperature of 80°C so as to draw the straight line α-β as a base line in the above-described measurement method is that a base line connecting a point corresponding to 80°C as a starting point and a melt end temperature as an end point is preferable for obtaining the calorific value of the high-temperature peak with fine reproducibility and stability.

In the DSC curve that is measured by a heat flux differential scanning calorimetry, the polyvinylidene fluoride resin expanded beads of the present invention is preferable such that in the DSC curve of the first heating, the calorific value Eh (J/g) of the high-temperature peak on the higher-temperature side than the endothermic peak which is inherent in the polyvinylidene fluoride resin and the total calorific value Et (J/g) of the endothermic peak which is inherent in the polyvinylidene fluoride resin and the endothermic peak of the high-temperature peak satisfy the following formula (1).

$$0.05 \leq Eh/Et \leq 0.25 \quad \ldots \quad (1)$$

(In the formula, Et represents the total calorific value (J/g) of the endothermic peaks of the inherent peak and the endothermic peak of the high-temperature peaks on the DSC curve of the first heating, and Eh represents the calorific value (J/g) of the high-temperature peaks.)

When the above formula (1) is satisfied, the amount of a crystalline component present in the resin beads at the time of producing the expanded beads is suitable for foamability and moldability. That is, there is no case where cells are integrated with each other immediately after the generation of the cells in the resin beads or the growth rate of the cells becomes too high, whereby the cells break. Moreover, expanded beads to be obtained are excellent in foamability during the molding.

It is desirable that the Eh/Et satisfy the above formula (1) from the viewpoint of both the foamability and moldability of the expanded beads. Furthermore, it is more desirable that the Eh/Et satisfy the following formula (2), and it is still more desirable that the Eh/Et satisfy the following formula (3).

$$0.08 \leq Eh/Et \leq 0.20 \quad \ldots \quad (2)$$

$$0.10 \leq Eh/Et \leq 0.16 \quad \ldots \quad (3)$$

The apparent density of the expanded beads of the present invention is 25 to 150 g/L, and the expanded beads of the present invention have a small shrinkage ratio even when the apparent density thereof is low. The apparent density is preferably 30 to 140 g/L. The apparent density of the expanded beads of the present invention is an apparent density of the expanded beads in a stable state under atmospheric pressure after the expanded beads are subjected to a pressurization treatment by using air (after curing). Accordingly, the apparent density of the expanded beads of the present invention corresponds to maximum expansion ratio at the time of expanding. Specifically, the apparent density of the expanded beads is a value measured by subjecting the expanded beads to a pressurization treatment at 30°C for 48 hours under compressed air of 0.1 MPa, and then leaving the expanded beads to stand at 30°C for 240 hours under atmospheric pressure. The apparent density obtained by the above-described measurement method is sometimes referred to as an apparent density (A) or an apparent density after recovery.

The expanded beads having a low apparent density can be produced in such a manner that expanded beads having an apparent density of about 100 g/L are first obtained (one-step expansion), the inner pressure is applied to the expanded beads obtained by the one-step expansion by using a pressuring gas, and the expanded beads are heated by using steam to be subjected to further expanding (two-step expansion).

In a case where the strength of the cell membranes of fine cells in the expanded beads is weak when producing the expanded beads having a low apparent density by the above-described method, the expanded beads excessively shrink after the expansion ratio reaches the maximum expansion ratio during of expanding. However, the shrinkage of the expanded beads of the present invention is small even when obtaining the expanded beads having a low apparent density as described above, that is, the expanded beads having a high expansion ratio.

The shrinkage ratio of the expanded beads of the present invention which is represented by the following formula (4) is 50% or less, and preferably 45% or less. The small shrinkage of the expanded beads of the present invention attributes satisfying the above-described requirements of the flexural modulus and the melt flow rate of the base resin composing the expanded beads.

$$\text{Shrinkage ratio of the expanded beads} = [1 - (A/B)] \times 100 \quad .. (4)$$

(In the formula, A represents the apparent density (A) of the expanded beads after recovery; B represents the apparent density of the expanded beads that have been dried at 60°C for one hour after expanding; the apparent density of B is sometimes referred to as the apparent density (B) in order to distinguish from the apparent density (A).)

The expanded beads of the present invention have preferably an average cell diameter of 20 to 800 $\mu$m. When the cell diameter is in the above range, a molded article of the expanded beads having good appearance and mechanical properties can be obtained. The average cell diameter of the expanded beads is preferably 30 to 500 $\mu$m, and more preferably 40 to 350 $\mu$m.

In the present invention, the average cell diameter of the expanded beads can be obtained as follows.

First, the expanded beads are cut in approximately half to obtain cell cross-sectional surfaces. The following operations are carried out based on an enlarged picture obtained by photographing the cross-sectional surfaces by a microscope. In the above-described enlarged picture of the cell cross-sectional surfaces, four straight lines that run from one surface of the expanded bead to the surface of the other bead and pass through the central areas of the cell cross-sectional surfaces are drawn in eight directions. Next, the total number: N (units) of the cells that intersect with the above-described four straight lines is obtained. Then, the value obtained by dividing the summation of the lengths of the respective four lines: L ($\mu$m) by the total number of the cells: N (L/N) is defined as the average cell diameter of the expanded beads.

The closed cell content of the expanded beads of the present invention is 80% or more. When the closed cell content is too low, the secondary foaming property of the expanded beads is deteriorated. In addition, when a molded article of the expanded beads is obtained by molding in a mold of the expanded beads having low closed cell content, the mechanical property of the molded article of the expanded beads is deteriorated. From the viewpoints as described above, the closed cell content is more preferably 85% or more, and still more preferably 90% or more. The closed cell content can be measured according to Procedure C described in ASTM-D-2856-70.

A molded article of the expanded beads can be obtained by in-mold molding of the expanded beads of the present invention. The shape of the molded article of the expanded beads obtained by in-mold molding of the expanded beads is not particularly limited. In addition to plate-like, column-like, container-like, and block-like shapes, examples of the shape of the molded article include a complex shape, for example three-dimensional shape, and a thick shape having a particularly thick thickness.

The apparent density of the molded article of the expanded beads which is obtained by filling the expanded beads of the present invention in the cavity of a mold for molding and performing in-mold molding by heating using a heating medium is approximately 15 to 150 g/L, preferably 20 to 120 g/L, and more preferably 25 to 90 g/L. As the apparent density of the molded article of the expanded beads decreases, the amount of gas generated when the molded article is burned (HF gas generated from the base resin) can be decreased. Therefore, it is possible to use the molded article in various applications, for example, in uses necessary for fire retardancy.

The closed cell content of the molded article of the expanded beads of the present invention is preferably 60% or more, more preferably 70% or more, and still more preferably 80% or more. When the closed cell content is too low, there is a concern in that the mechanical properties of the molded article of the expanded beads such as a compressive strength are deteriorated. In a similar way to the above-described expanded beads, the closed cell content of the molded article can be measured according to Procedure C described in ASTM-D-2856-70.

The measurement of the closed cell content of the molded article of the expanded beads can be performed in a similar manner to the measurement of the closed cell content of the expanded beads, except that samples for measurement are cut out from a central part of the cross-sectional surfaces of the molded article of the expanded beads and all mold skins are cut off to use the samples thus obtained as samples for measurement.

When using the expanded beads of the present invention, it is possible to obtain a molded article of the expanded beads that has excellent fusion-bonding property between the expanded beads and a high fusion-bonding ratio. The molded article of the expanded beads having a high fusion-bonding ratio is excellent in mechanical properties, particularly in flexural strength. The fusion-bonding ratio between the expanded beads of the molded article is preferably 50% or more, more preferably 60% or more, and particularly preferably 80% or more. Incidentally, the fusion-bonding ratio means the material fracture ratio of the expanded beads in the broken-out section obtained when the molded article of the expanded beads is fractured.

The molded article of the expanded beads obtained by molding in a mold of the expanded beads of the present invention has a small shrinkage ratio. Thus, the molded article of the expanded beads is excellent in dimensional stability and mold reproducibility and has good appearance. From the viewpoint of the dimensional stability and mold reproducibility, the shrinkage ratio of the molded article of the expanded beads is preferably 5% or less, more preferably 4% or less, and still more preferably 3.5% or less.

For example, the expanded beads of the present invention are produced as follows. First, a blowing agent and resin beads obtained by granulating a polyvinylidene fluoride resin are dispersed in a dispersing medium such as water in a pressure closed vessel. Subsequently, the resin beads are softened by heating under stirring and impregnated with the blowing agent to obtain foamable resin beads. Thereafter, the expandable resin beads are discharged together with the dispersing medium to a low pressure area (generally under atmospheric pressure) from the closed vessel at a temperature equal to or higher than the softening temperature of the resin beads so as to be subjected to expanding. Thus, expanded beads are obtained. Hereinafter, a method of discharging the foamable resin beads together with the dispersing medium so as to be subjected to expanding and foaming will be described in detail.

After the resin beads are heated to a temperature at which the polyvinylidene fluoride resin is melted and kneaded by an extruder, the obtained kneaded product is extruded through a small pore of a die attached to the tip of the extruder into a strand, and the strand is cut into suitable lengths and granulated into resin beads each having a suitable size for the production of the expanded beads to obtain the expanded beads. The average weight per one resin bead is generally 0.01 to 20 mg, and is particularly preferably 0.1 to 10 mg. The diameter of the resin beads is preferably 0.1 to 3.0 mm, and more preferably 0.3 to 1.5 mm. Moreover, in general, a ratio of the length and the diameter of the resin beads (length/diameter) is preferably adjusted to 0.5 to 3.0, and more preferably 0.8 to 2.5. Incidentally, when obtaining the resin beads using an extruder, the diameter of the resin beads, the ratio of the length and the diameter of the resin beads (length/diameter), and the average mass of the resin beads are adjusted as follows. For example, the above-described adjustment is performed in such a manner that the molten material of the polyvinylidene fluoride resin is extruded through a die that has a plurality of fine pores and is attached to the tip of the extruder, and the extruded molten material is cut into a predetermined size while appropriately changing a extrusion speed, a cutter speed or while in the case of a strand cutting method, changing a taking-up speed.

If desired, various additives that are generally used such as cell diameter controlling agents, anti-static agents, electrical conducting agents, lubricants, anti-oxidants, ultraviolet absorbing agents, flame retardants, metal deactivators, pigments, dyes, crystal nucleus agents or fillers can be suitably incorporated into the resin beads.

Examples of the cell diameter controlling agents (referred to as cell controlling agent(s)) may include inorganic substances such as talc, sodium chloride, calcium carbonate, silica, titanium oxide, gypsum, Zeolite, borax, aluminum hydroxide and carbon, as well as organic agents such as phosphate agents, phenol agents, amine agents and polytetrafluoroethylene (PTFE).

Although the amount of these various additives to be added differs depending on the purpose of addition, the amount thereof is preferably 25 parts by weight or less, more preferably 15 parts by weight or less, and particularly preferably 5 parts by weight or less with respect to 100 parts by weight of the polyvinylidene fluoride resin.

The dispersing medium for dispersing the resin beads during the production of the expanded beads is not limited to water described above, and any solvent that does not dissolve the resin beads can be used. Although examples of the dispersing medium other than water may include ethylene glycol, glycerin, methanol, ethanol, water is generally used.

In the above-described method for producing the expanded beads, in order for the resin beads to disperse uniformly in the dispersing medium, as necessary, it is preferable to add a dispersing agent or a dispersing aid. Examples of the dispersing agent include poorly-water soluble inorganic substances such as aluminum oxide, calcium triphosphate, magnesium pyrophosphate, zinc oxide, kaolin, mica and talc. Examples of the dispersing aids include anionic surfactants such as sodium dodecylbenzenesulfonate and sodium alkanesulfonates. For the amount of the dispersing agent (including the dispersing aid) that is added to the dispersing medium, it is preferable to adjust the ratio of the weight of the resin beads to the weight of the dispersing agent (the weight of the resin beads/the weight of the dispersing agent) to 20 to 2000, and further to 30 to 1000. Furthermore, it is preferable to adjust the ratio of the weight of the dispersing agent to the weight of the dispersing aid (the weight of the dispersing agent/the weight of the dispersing aid) to 1 to 500, and further to 5 to 100.

Alternatively, it is also possible to obtain expandable resin beads by impregnating the above-described resin beads with the blowing agent, and cooling without discharging to the low pressure area. The expandable resin beads can be expanded by heating again to obtain expanded beads.

As the blowing agent used in the production of the expanded beads, organic physical blowing agents and inorganic physical blowing agents, or mixtures thereof, can be used. Examples of the organic physical blowing agents may include aliphatic hydrocarbons such as propane, butane, hexane and heptane, alicyclic hydrocarbons such as cyclobutane and cyclohexane, halogenated hydrocarbons such as chlorofluoromethane, trifluoromethane, 1,1-difluoromethane, 1,1,1,2-tetrafluoroethane, methyl chloride, ethyl chloride and methylene chloride, dialkyl ethers such as dimethyl ether, diethyl ether and methyl ethyl ether, and these can be used as a mixture of two or more kinds. Furthermore, examples of the inorganic physical blowing agent may include nitrogen, carbon dioxide, argon, air, water, and these can be used as a mixture of two or more kinds. When the organic physical blowing agent and inorganic physical blowing agent are mixed and used, a combination of the compounds that are optionally selected from the organic physical blowing agents and inorganic physical blowing agents can be used.

The use amount of the blowing agent is determined by considering the apparent density of the expanded beads as a target, or the kind of the blowing agent. In general, it is preferable to use 5 to 50 parts by weight of the organic physical blowing agent per 100 parts by weight of the resin beads and it is preferable to use 0.5 to 30 parts by weight of the inorganic physical blowing agent per 100 parts by weight of the resin beads.

Among these blowing agents, from the viewpoint of preventing environmental contamination, the inorganic physical blowing agents are preferably used and, among the inorganic physical blowing agents, nitrogen, air, carbon dioxide and water are preferably used. When water is used as a dispersing medium in production of the expanded beads, by using one which is obtained by mixing a water absorbing substance with the resin beads, it is possible to effectively use water that is a dispersing medium as a blowing agent.

The expanded beads having the above-described higher-temperature peaks of the present invention can be obtained by a method of dispersing polyvinylidene fluoride resin beads and a blowing agent in a dispersing medium such as water in a pressure closed vessel, softening the resin beads and impregnating the resin beads with the blowing agent, and discharging the resin beads that have been impregnated with the blowing agent together with the dispersing medium to a low pressure area (generally under atmospheric pressure) from the closed vessel at a temperature equal to or higher than the softening temperature of the resin beads so as to be subjected to expanding. During dispersing the resin beads in the dispersing medium in the closed vessel and heating the resin beads under stirring, the temperature is not raised to the melt end temperature Te of the resin beads or higher but adjusted to an optional temperature Ta within the range from a temperature that is 15°C lower than the melting point Tm of the resin beads to a temperature lower than the melt end temperature Te, and the temperature Ta is kept for a sufficient time period, preferably for 10 to 60 minutes. Thereafter, the temperature is adjusted to an optional temperature Tb within the range from a temperature that is 15°C lower than the melting point Tm of the resin beads (Tm - 15°C) to a temperature that is 5°C higher than the melt end temperature Te (Te + 5°C), and the resin beads are discharged together with the dispersing medium from the closed vessel to the low pressure area at that temperature and foamed. In addition, keeping within the range from the above-described (Tm - 15°C) to lower than Te for forming the high-temperature peaks can be set to multi-steps within the temperature range, or the high-temperature peaks can also be formed by raising the temperature slowly over a sufficient time period within the temperature range. By this keeping operation, it is also possible to form the high-temperature peaks.

Formation of the high-temperature peaks of the expanded beads and the degree of the calorific value of the high-temperature peaks mainly depend on the above-described temperature Ta, the retention time at the temperature Ta, the above-described temperature Tb, and the heating rate within the range from (Tm - 15°C) to (Te + 5°C) with respect to the resin beads during the production of the expanded beads. The less the temperature Ta or temperature Tb is in the above-described each temperature range, the longer the retention time within the range from (Tm - 15°C) to lower than Te is, and the slower the heating rate within the range from (Tm - 15°C) to lower than Te is, the more the calorific value of the high-temperature peak of the expanded beads tends to be. Meanwhile, the heating rate that is generally adopted is 0.5 to 5°C/min. On the other hand, the higher the temperature Ta or temperature Tb is in the above-described each temperature range, the shorter the retention time within the range from (Tm - 15°C) to lower than Te is, the faster the heating rate within the range from (Tm - 15°C) to lower than Te is, and the slower the heating rate within the range from Te to (Te + 5°C) is, the smaller the calorific value tends to be. By performing a preliminary experiment with considering these points, the conditions for the production of the expanded beads that show a desired calorific value of the high-temperature peaks can be found. In addition, the temperature range for the formation of the high-temperature peaks is a suitable temperature range therefor when an inorganic physical blowing agent (for example, carbon dioxide) is used as a blowing agent. Therefore, when the blowing agent is changed to an organic physical blowing agent, the suitable temperature range is shifted from above-described temperature range to the lower-temperature side by 0 to 30°C, respectively, depending on the kind and use amount thereof.

During discharging of the contents in the pressure closed vessel from the closed vessel to the low pressure area for producing the expanded beads, it is preferable to discharge the contents while applying a back pressure to the inside of the closed vessel by the expanding agent used or an inorganic gas such as nitrogen and air so that the pressure in the container is not decreased rapidly, in view of equalization of the apparent density of the obtained expanded beads.

As described above, by discharging the resin beads that have been impregnated with the blowing agent from the inside of the closed vessel to a low pressure area and subjecting the resin beads to expand (one-step expansion), expanded beads can be obtained. Moreover, for the purpose of obtaining expanded beads having a high expansion ratio, the expanded beads obtained by the one-step expansion is applied with the inner pressure and then heated by using steam so as to be subjected to expand (two-step expansion).

Specifically, a curing process, which is generally performed after discharging, is performed on the expanded beads obtained by discharging from the inside of the closed vessel to a low pressure area by the above-described method, and then the expanded beads (the expanded beads of the one-step expansion) are filled in a closed vessel for pressurization. Thereafter, the expanded beads are subjected to a pressurization treatment by using a pressure gas such as air to adjust the pressure in the expanded beads to 0.01 to 0.9 MPa (G). Then, the expanded beads is removed from the container and expanded by heating using a heating medium such as steam or hot air to obtain expanded beads having a lower apparent density (two-step expanded beads).

In order to obtain the molded article of the expanded beads of the present invention, a conventionally known mold for in-mold molding of thermoplastic resin expanded beads, which can be heated and cooled, and can be opened and closed and sealed, is used. A molded article of the expanded beads is formed by filling the expanded beads in the cavity of the mold, supplying steam having a saturated vapor pressure of 0.05 to 0.48 MPa (G), preferably 0.08 to 0.42 MPa (G), to heat and inflate the e xpaded beads in the mold cavity, and fusion-bonding the expanded beads to each other. Subsequently, the obtained molded article of the expanded beads are cooled and removed from the cavity. The foamed molded article can be produced by adopting a batch-type in-mold molding method (for example, the molding methods described in JP 4-46217 B and JP 6-49795 B.

Incidentally, when performing in-mold molding, the molding can be carried out by performing an operation for increasing the pressure in the expanded beads in a similar operation to the above-described two-step expanding and filling the expanded beads in which the pressure in the expanded beads is adjusted to 0.01 to 0.3 MPa (G) in the mold.

Moreover, a compression filling molding can be also adopted.

As the method for heating by steam having a saturated vapor in the in-mold molding method, a conventionally known method in which heating methods such as one-direction heating, reversed one-direction heating and main heating are suitably combined can be adopted. In particular, a method of heating the expanded beads by preliminary heating, one-direction heating, reversed one-direction heating and main heating in this order is preferable. As used herein, the one-direction heating means supplying a heating medium to the inner portion of either a male mold or female mold (hereinafter, referred to as a chamber) to heat a cavity, followed by ejecting the heating medium from the chamber of the female mold or male mold (another mold with respect to the mold to which the heating medium has been supplied). A case where the mold to which the heating medium is supplied and the mold from which the heating medium is ejected are opposite to those of the case of the above-described one-direction heating refers to reversed one-direction heating. Incidentally, the a saturated vapor pressure of 0.05 to 0.48 MPa (G) during the molding of the expanded beads is maximum value of the saturated vapor pressure of the steam that is supplied to the inside of the mold in the in-mold molding process.

Alternatively, the molded article of the expanded beads can also be produced, for example, by continuous molding methods described in JP 9-104026 A, JP 9-104027 A and JP 10-180888 A.

The polyvinylidene fluoride resin expanded beads of the present invention can be exhibit conductive property by including a conductive carbon thereto. The content of the conductive carbon is preferably 5 to 20% by weight, and more preferably 5 to 15% by weight. When the content of the conductive carbon is within the above-described range, the molded article of the expanded beads obtained from the expanded beads containing the conductive carbon exhibits conductive property and has excellent conductive property of a volume resistivity value of $10^0$ to $10^4$ $\Omega \cdot$cm.

As the conductive carbon, acetylene black, furnace black, can be used, but furnace black which can give a high conductive property in a small added amount is preferably used. Furnace black, which has dibutyl phthalate oil absorption of 300 ml/100 g or more and BET specific surface area of 700 $m^2$/g or more, is preferably used because it can give a high conductive property, particularly, even when used in a small added amount. Examples of such furnace black include Ketjen Black EC (produced by Lion Corporation) and they can be used singly or in a combination of two or more kinds.

The volume resistivity value was measured according to the measurement method prescribed in JIS K 7194 (1994) in such a manner that a test piece of 80 mm $\times$ 50 mm $\times$ thickness 20 mm in which a skin layer was removed was cut out from the molded article and the test piece which was left to stand for 60 hours under atmosphere of a temperature of 23°C and a humidity of 50% was used as a sample to be measured. The resistivity of the sample after one minute was measured and the volume resistivity value was calculated from the measured value thus obtained. As a measurement site, five sites on the test piece were measured according to JIS K 7194.

Examples

The present invention will be specifically described by Examples.
(i) The evaluation method of the expanded beads will be described below.

(a) Apparent Density

In the present invention, the apparent density (A) of the expanded beads is measured in such a manner that the obtained expanded beads are put in a closed vessel, subjected to a pressurization treatment at 30°C for 48 hours by compressed air of 0.1 MPa, the pressure was then discharged to leave the expanded beads to stand at 30°C for 240 hours under atmospheric pressure, and after that, the measurement is performed on the expanded beads. The group of the expanded beads of which the weight had been measured in advance was immersed under water in a Graduated cylinder by using a metal mesh, the weight of the group of the expanded beads was divided by the volume of the group of the expanded beads obtained from increase in the water level, and the obtained value was converted into unit g/L. Thus, the apparent density (A) was obtained. Incidentally, the apparent density of the two-step expanded beads (the expanded beads obtained by the two-step expansion) was referred to as the apparent density (A2).

Meanwhile, the apparent density (B) is measured in such a manner that the resin beads are expanded, only a drying operation is then performed for one hour in a Geer oven set at 60°C, and after that, the measurement is performed on the expanded beads. The group of the expanded beads of which the weight had been measured in advance was immersed under water in a Graduated cylinder by using a metal mesh, the weight of the group of the expanded beads was divided by the volume of the group of the expanded beads obtained from increase in the water level, and the obtained value was converted into unit g/L. Thus, the apparent density (B) was obtained.

(b) Shrinkage Ratio of Expanded Beads

The shrinkage ratio of the expanded beads was calculated by the following formula (5) from the apparent density (A) and apparent density (B) of the expaded beads in the above-described item (a).

$$\text{Shrinkage ratio of the expanded beads} = 1 - (\text{apparent density (A)/ apparent density (B))} \times 100 \ldots (5)$$

Since the shrinkage ratio of the expanded beads differs depending on an expansion ratio, the shrinkage state was evaluated using the expanded beads after the one-step expansion.

(c) The closed cell content of the expanded beads was measured as follows.

The obtained expanded beads were put in a closed vessel, subjected to a pressurization treatment at 30°C for 48 hours by compressed air of 0.1 MPa, and the pressure was discharged to leave the expanded beads to stand at 30°C for 10 days under atmospheric pressure. Subsequently, the expanded beads were left to stand for 10 days at a constant temperature room in the condition of a relative humidity of 50% and a temperature of 23°C under atmospheric pressure and were cured. Next, the expanded beads having a bulk volume of about 20 cm$^3$ which had been left to stand for 10 days in the constant temperature room were used as a sample for measurement and an apparent volume Va was measured accurately by a submerging method as follows. After the sample for measurement in which the apparent volume Va had been measured was dried sufficiently, a value Vx of the true volume of the sample for measurement was measured by "Air Comparison Pycnometer 930" (manufactured by Toshiba Beckmann Inc.) according to Procedure C of ASTM-D-2856-70. Then, the closed cell content was calculated by the following formula (6) based on these volume values Va and Vx and an average value of five samples (N = 5) was set to the closed cell content of the expanded beads.

$$\text{Closed cell content (\%)} = (Vx - W/\rho) \times 100/(Va - W/\rho) \ldots (6)$$

Provided that,
Vx: the true volume (cm$^3$) of the expanded beads measured by the above-described method, that is, a sum of the volume of the resin composing the expanded beads and the total cell volume of the closed cell portions in the expanded beads,
Va: the apparent volume (cm$^3$) measured from an increase in the water level after the expanded beads are submerged in a Graduated cylinder filled with water,
W: the weight (g) of the sample for measurement of the expanded beads, and
p: the density (g/cm$^3$) of the resin composing the ex paded beads.
(ii) Measurement and evaluation methods of properties of the molded article of the expanded beads are described in detail.

(d) Apparent Density of Molded Article

The apparent density was obtained by cutting out a test piece of 50 mm × 50 mm × 50 mm from the part having no molded surface skin on the molded article of the expanded beads, and calculating from the volume V2 (L) and weight W2 (g) of the test piece.

(e) Fusion-bonding Property between Expanded Beads in Molded Article

On one surface of the surfaces of the molded article of vertical length 150 mm × horizontal length 60 mm that was molded in the mold cavity of vertical length 200 mm × horizontal length 250 mm × thickness 50 mm, about 10 mm of a cut was made in the thickness direction of the molded article using a cutter knife so as to cut the length of the molded article into two equal lengths. Then, a value of the ratio (m/n) of the number of the expanded beads present on the broken-out section (n) and the number of the material-fractured expanded beads (m) was calculated by a test in which the molded article is fractured by folding the molded article from the cutting portion.
The larger the value of the ratio (m/n) becomes the stronger the fusion-bonding ratio between the expanded beads. According to this, the molded article has excellent mechanical properties such as flexural strength and tensile strength.

The number (n) of the above-described expanded beads is the summation of the number of the expanded beads that are delaminated between the expanded beads and the number (m) of the expaded beads that are material-fractured in the expanded beads.

(f) Shrinkage Ratio of Molded Article

The shrinkage ratio of the molded article was measured and evaluated by the following formula (7) based on the dimension of the mold of horizontal length 250 mm and the length (X) of the molded article of the expanded beads corresponding to the dimension of the mold which was cured at 80°C for 24 hours after molding.

$$\text{Shrinkage ratio of the molded article (\%)} = [(250 - X)/250] \times 100 \ \dots \ (7)$$

(g) Heat Resistance (Dimensional Stability upon Heating)

The dimensional stability against heating of the molded article of the expanded beads was evaluated as follows.
The dimensional stability was measured according to the thermal stability (dimensional stability at high temperature, appendix B) described in JIS K 6767 (1999). A test piece in which the molded surface skin was remained was cut out from the central portion of the obtained molded article of the expanded beads into vertical length 150 mm x horizontal length 150 mm x thickness of the molded article (thickness 50 mm). For the vertical and horizontal directions of the surface skin portion, each length of three lines was measured and an average value thereof was calculated to be a dimension before heating. Next, the test piece was placed in a Geer oven kept at 100°C. The test piece was taken out of the oven after heating was performed for 22 hours and then left to stand for one hour at a constant temperature and constant humidity room of a temperature of 23°C and a relative humidity of 50%. Thereafter, a dimension after heating was measured by the following formula (8) using dimensions before and after heating to obtain a variation in dimensions by heating.

$$\text{Variation in dimensions by heating (\%)} = [(\text{dimension after heating} - \text{dimension before heating})/\text{dimension before heating}] \times 100 \ \dots \ (8)$$

(h) Appearance of Molded Article

The appearance of the molded article was evaluated based on the following criteria.

Good: No irregularity and corrugation due to shrinkage on the surface are confirmed.
Bad: Irregularity and corrugation due to shrinkage on the entire surface are confirmed.

Example 1

(Production of Resin Beads)

0.15 part by weight of a cell controlling agent (PTFE; polytetrafluoroethylene) per 100 parts by weight of polyvinylidene fluoride resin was added to polyvinylidene fluoride resin (Resin 1) described in Table 1, and was melt-kneaded in a single-axial extruder having an inner diameter of 40 mm, the obtained kneaded product was extruded through a small pore of a die attached to the tip of the extruder into a strand, and the strand was cooled and then cut to obtain resin beads in which a weight of the resin beads is approximately 1. 3 mg.

(Production of Expanded Beads)

1 kg of the above-described resin beads were charged together with 3 liters of water as a dispersing medium into a 5 liter pressure closed vessel equipped with a stirrer. 0.3 part by weight of kaolin as a dispersing agent, 0.004 part by weight of sodium alkylbenzene sulfonate as a surfactant and 0.01 part by weight of aluminum sulfonate were further added to the dispersing medium per 100 parts by weight of the resin beads. The temperature was raised under stirring to a temperature that is 5°C lower than the expanding temperature described in Table 2, carbon dioxide as a blowing agent was introduced to the inside of the closed vessel up to a pressure that is 0.2 MPa (G) lower than the pressure in the closed vessel described in Table 2, and the temperature was kept for 15 minutes. Subsequently, after the temperature was raised to the expanding temperature described in Table 2, carbon dioxide was introduced to adjust the pressure to the pressure in the closed vessel described in Table 2, and the temperature was kept for 15 minutes at the expanding temperature described in Table 2 so that a predetermined endothermic calorific value of the high-temperature peaks can be obtained.

Thereafter, while applying a back pressure by nitrogen so as to adjust the pressure in the container to a constant pressure, the expandable resin beads together with the dispersing medium were discharged under atmospheric pressure to obtain expanded beads described in Table 2.

All properties, such as the above-described apparent density (A), apparent density (B), endothermic calorific value of the high-temperature peak (the calorific value of the high-temperature peak), closed cell content and average cell diameter, were measured and evaluated with regard to the obtained expanded beads, and the results are described in Table 2.

(Molding of Molded Article of Expanded Beads)

Using a general molding machine for expanded beads equipped with a flat plate molding mold of vertical length 200 mm × horizontal length 250 mm × thickness 50 mm, the obtained expanded beads were filled in the cavity of the flat plate molding mold after applying the inner pressure described in Table 2, and molding by steam heating described in Table 2 to obtain a plate-like molded article of the expanded beads. The molded article of the expanded beads was cured in an oven at 80°C for 12 hours to obtain a molded article of the polyvinylidene fluoride resin expanded beads.

Example 2

Resin beads and expanded beads were obtained in a similar manner to Example 1, except that the conditions described in Table 2 were changed to the conditions as described in Table 3 (one-step expansion). Further, after applying the inner pressure described in Table 3, the two-step expansion was performed under the conditions described in Table 3 to obtain expanded beads having a lower apparent density. The inner pressure described in Table 3 was applied to the above-described expanded beads, the expanded beads that had been applied with the inner pressure were filled in the cavity of the flat plate molding mold, and molding by steam heating using a vapor pressure described in Table 3 to obtain a molded article of the expanded beads having the same plate-like shape as that of Example 1. The molded article of the expanded beads was cured in an oven at 80°C for 12 hours to obtain a molded article of the polyvinylidene fluoride resin expanded beads.

Example 3

Resin beads were obtained in a similar manner to Example 2, except that Resin 2 described in Table 1 was used as a polyvinylidene fluoride resin, and one-step expanded beads and two-step expanded beads described in Table 3 were obtained. The obtained expanded beads were molded under the conditions described in Table 3 in a similar manner to Example 2 to obtain a molded article of the expanded beads.

Example 4

Resin beads were obtained in a similar manner to Example 2, except that Resin 3 described in Table 1 was used as a polyvinylidene fluoride resin, and one-step expanded beads and two-step expanded beads described in Table 3 were obtained. The obtained expanded beads were molded under the conditions described in Table 3 in a similar manner to Example 2 to obtain a molded article of the expanded beads.

Comparative Example 1

Resin beads were obtained in a similar manner to Example 1, except that Resin 4 described in Table 1 was used as a polyvinylidene fluoride resin, and expanded beads described in Table 2 were obtained. The obtained expanded beads were molded under the conditions described in Table 2 in a similar manner to Example 1 to obtain a molded article of the expanded beads.

In Comparative Example 1, since the flexural modulus of the polyvinylidene fluoride resin as a base resin was low, the shrinkage ratio of the expaded beads was large. Moreover, the molded article of the expaded beads had a large shrinkage ratio of the molded article and thus it is found that reproducibility of the mold shape or dimensional stability was deteriorated.

Comparative Example 2

Resin beads were obtained in a similar manner to Example 2, except that Resin 4 described in Table 1 was used as a polyvinylidene fluoride resin, and one-step expanded beads and two-step expanded beads described in Table 3 were obtained. The obtained expanded beads were molded under the molding conditions described in Table 3 in a similar manner to Example 2 to obtain a molded article of the expanded beads.

In Comparative Example 2 as in Comparative Example 1, since the flexural modulus of the polyvinylidene fluoride resin as a base resin was low, the shrinkage ratio of the expanded beads was large. Moreover, the obtained molded article of the expanded beads had a large shrinkage ratio of the molded article and thus it is found that reproducibility of the mold shape or dimensional stability was deteriorated.

Comparative Example 3

Resin beads were obtained in a similar manner to Example 2, except that Resin 5 described in Table 1 was used as a polyvinylidene fluoride resin, and one-step expanded beads and two-step expanded beads described in Table 3 were obtained. The obtained expanded beads were molded under the molding conditions described in Table 3 in a similar manner to Example 2 to obtain a molded article of the expanded beads. In Comparative Example 3, the melt flow rate of the resin is small and the expanded beads having high closed cell content could not be obtained. Thus, the shrinkage ratio of the molded article of the expanded beads was large.

Example 5

Resin beads were obtained in a similar manner to Example 1, except that Resin 1 described in Table 1 was used as a polyvinylidene fluoride resin, 7% by weight of Ketjen Black (produced by Lion Corporation, product name: EC300J) was added thereto and the weight of the resin beads was adjusted to be approximately 4 mg, and one-step expanded beads described in Table 2 were obtained. The obtained expanded beads were molded under the conditions described in Table 2 in a similar manner to Example 1 to obtain a molded article of the expanded beads. The volume resistivity value of the obtained molded article of the expanded beads was $6 \times 10^3$ Ω·cm.

The addition of conductive carbon was performed as follows. First, the polyvinylidene fluoride resin described in Table 1 (Resin 1) and Ketjen Black (produced by Lion Corporation, product name: EC300J, dibutyl phthalate oil absorption: 360 ml/100 g, BET specific surface area: 800 m$^2$/g) were melt-kneaded using a biaxial extruder to produce a compound containing 7% by weight of Ketjen Black. Subsequently, 0.15 part by weight of a cell controlling agent (PTFE; polytetrafluoroethylene) per 100 parts by weight of the previously produced compound was added thereto, the obtained mixture was melt-kneaded in a single-axial extruder having an inner diameter of 40 mm, the obtained kneaded product was extruded through a small pore of a die attached to the tip of the extruder into a strand, and the strand was cooled and then cut to obtain resin beads in which a weight of the resin beads is approximately 4.0 mg.

Reference Example

Resin beads were obtained in a similar manner to Comparative Example 1, except that Resin 4 described in Table 1 was used as a polyvinylidene fluoride resin, and expanded beads having an apparent density of 205 g/L were obtained. Further, the obtained expanded beads were molded under the same molding conditions as those in Comparative Example 1 to obtain a molded article of the expanded beads.

Even when using the resin of Comparative Example 1, in a case where the apparent density was high, the shrinkage ratio of the expanded beads was 35% and the shrinkage ratio of the molded article of the expanded beads was 2.5%. Thus, there was no problem in molding.

[Table 1]

| | Polyviniridene fuluoride resin | VDF/HFP ratio | Product name | Melting point (°C) | Total calorific value(J/g) | MFR(g/10min) 230°C, 2.16 kg load | Flexural modulus (MPa) |
|---|---|---|---|---|---|---|---|
| Resin 1 | Vinilydene fluoride-hexafluoropropylene copolymer | 92/8 | Solef 20808 manufactured by Solvay Solexis | 151 | 37 | 5 | 820 |
| Resin 2 | Vinilydene fluoride-hexafluoropropylene copolymer | 90/10 | Solef 11008 manufactured by Solvay Solexis | 162 | 37 | 10 | 1000 |
| Resin 3 | Vinilydene fluoride-hexafluoropropylene copolymer | 90/10 | Solef 11010 manufactured by Solvay Solexis | 161 | 37 | 2 | 900 |
| Resin 4 | Vinilydene fluoride-hexafluoropropylene copolymer | 85/15 | Solef 21508 manufactured by Solvay Solexis | 135 | 23 | 8 | 380 |
| Resin 5 | Vinilydene fluoride-hexafluoropropylene copolymer | 95/5 | KYNAR FLEX 2850-00 | 161 | 47 | 0.1 | 1100 |

EP 2 746 307 B1

[Table 2]

|  |  | Example 1 | Comparative Example 1 | Example 5 | Reference Example |
|---|---|---|---|---|---|
| Production condoition | Resin | 1 | 4 | 1 | 4 |
| | Blowing agent | Carbon dioxide | Carbon dioxide | Carbon dioxide | Carbon dioxide |
| | Pressure in closed vessel (MPa) | 4.0 | 4.0 | 4.0 | 2.5 |
| | Expanded temperature (°C) | 143.0 | 128.5 | 147.5 | 128.5 |
| One-step expanded beads | Apparent density (g/L) (A) | 89 | 102 | 122 | 205 |
| | Apparent density immediately after expansion (g/L)(B) | 131 | 219 | 133 | 212 |
| | Shrinkage ratio of expanded beads 1-A/B(%) | 32 | 53 | 8.1 | 3.6 |
| | Calorific value of high-temperature peak Eh(J/g) | 3.7 | 5.1 | 3.3 | 7.6 |
| | Total calorific value Et(J/g) | 34 | 23 | 34 | 25 |
| | Calorific value of high-temperature peak/total calorific value (Eh/Et) | 0.11 | 0.23 | 0.10 | 0.30 |
| | Closed cell content (%) | 94 | 88 | 90 | 92 |
| | Average cell diameter ($\mu$ m) | 65 | 75 | 60 | 40 |
| Molding condition | Pressure in beads (MPa (G)) | 0.06 | 0.05 | 0.18 | 0.10 |
| | Molding steam pressure (MPa (G)) | 0.34 | 0.20 | 0.30 | 0.22 |
| Molded article | Density of molded article (g/L) | 65 | 79 | 93 | 140 |
| | Shrinkage ratio (%) | 2.6 | 4.0 | 2.7 | 3.3 |
| | Fusion-bonding ratio (%) | 80 | 80 | 100 | 90 |
| | Appearance | good | good | good | good |
| | Heat resistance Rate of dimension change upon heating [100°C](%) | -1.0 | -3.1 | -1.1 | -2.7 |

[Table 3]

|  |  | Example 2 Example | example 3 | Example 4 | Comparative example 2 | Comparative example 3 |
|---|---|---|---|---|---|---|
| Production condition | Resin | 1 | 2 | 3 | 4 | 5 |
| | Blowing agent | Carbon dioxide | Carbon dioxide | Carbon dioxide | Carbon dioxide | Carbon dioxide |
| | Pressure in closed vessel (MPa) | 4.0 | 4.0 | 4.0 | 4.0 | 4.0 |
| | Expanded temperatur (°C) | 142.5 | 151.3 | 151.3 | 129.0 | 152.0 |

(continued)

|  | | Example 2 Example | example 3 | Example 4 | Comparative example 2 | Comparative example 3 |
|---|---|---|---|---|---|---|
| One-step expanded beads | Apparent density (g/L)(A) | 103 | 113 | 112 | 95 | 199 |
| | Apparent density immediately after expansion (g/LXB) | 107 | 117 | 113 | 203 | 200 |
| | Srinkage ratio of expanded beads 1-A/B(%) | 3.7 | 3.4 | 0.9 | 53 | 0.4 |
| | Calorific value of high-temperature peak Eh(J/g) | 4.9 | 6.7 | 4.3 | 4.5 | 2.0 |
| | Total calorific value Et (J/g) | 34 | 36 | 35 | 24 | 45 |
| | Calorific value of high-temperature peak/total calorific value (Eh/Et) | 0.14 | 0.19 | 0.12 | 0.19 | 0.04 |
| Two-step expanded beads | Pressure in beads (MPa) | 0.40 | 0.24 | 0.22 | 0.18 | 0.52 |
| | Steam pressure (MPa(G)) | 0.14 | 0.12 | 0.12 | 0.04 | 0.16 |
| | Apparent density (A2) (g/L) | 47 | 66 | 67 | 58 | 64 |
| | Closed cell content (%) | 94 | 94 | 95 | 92 | 78 |
| | Average cell diameter ($\mu$ m) | 71 | 53 | 63 | 78 | 86 |
| Molding condition | Pressure in beads (MPa)(G)) | 0.09 | 0.06 | 0.07 | 0.10 | 0.10 |
| | Molding steam pressure (MPa (G)) | 0.32 | 0.38 | 0.40 | 0.18 | 0.40 |
| Molded article | Density of molded article (g/L) | 38 | 46 | 48 | 49 | 54 |
| | Shrinkage ratio (%) | 3.4 | 2.6 | 2.4 | 6.0 | 7.0 |
| | Fusion-bonding ratio (%) | 80 | 100 | 100 | 80 | 80 |
| | Appearance | good | good | good | good | bad |
| | Heat resistance Rate of dimension change upon heating [100°C] (%) | -2.3 | -0.7 | -0.6 | -6.0 | -1.8 |

## Claims

1. Polyvinylidene fluoride resin expanded beads comprising a polyvinylidene fluoride resin as a base resin, wherein; a flexural modulus of the polyvinylidene fluoride resin measured according to JIS K 7171 is 450 MPa or more, a melt flow rate (MFR) of the polyvinylidene fluoride resin is 1g/10 min or more at 230°C and 2.16 kg load based on ASTM D1238, an apparent density of the expanded beads is 25 to 150 g/L, and a closed cell content of the expanded beads is 80% or more (ASTM D 2856-70)

2. The polyvinylidene fluoride resin expanded beads according to claim 1, wherein a DSC curve that is measured when the expanded beads are heated from 30°C to 200°C at a heating rate of 10°C/min by a heat flux differential scanning calorimetry (a DSC curve of the first heating) has a crystalline structure in which an endothermic peak that is inherent in the polyvinylidene fluoride resin (inherent peak) and one or more endothermic peaks (high-temperature peaks) on the higher-temperature side than the inherent peak appear, and the DSC curve of the first heating satisfies the condition of the following formula (1),

$$0.05 \leqq Eh / Et \leqq 0.25 \ldots (1)$$

(In the formula, Et represents a total calorific value (J/g) of the endothermic peaks of the inherent peak and the high-temperature peak on the DSC curve of the first heating, and Eh represents a calorific value (J/g) of the high-temperature peaks.)

3. The polyvinylidene fluoride resin expanded beads according to claim 1, wherein the flexural modulus of the polyvinylidene fluoride resin is 500 to 1200 MPa.

4. The polyvinylidene fluoride resin expanded beads according to claim 1, wherein the melt flow rate of the polyvinylidene fluoride resin is 1.5 to 15 g/10 min at 230°C and 2.16 kg load.

5. The polyvinylidene fluoride resin expanded beads according to claim 2, wherein the calorific value of the high-temperature peaks is 2 to 30J/g.

6. A method for producing polyvinylidene fluoride resin expanded beads having an apparent density of 25 to 150 g/L and has 80%or more of closed cell content comprising :

dispersing resin beads, which include, as a base resin, a polyvinylidene fluoride resin having a flexural modulus of 450 MPa or more and a melt flow rate (MFR) of 1 g/10 min or more at 230°C and 2.16 kg load, in dispersing medium in a closed vessel and heating the resin beads;
impregnating the resin beads with a blowing agent under pressure to obtain expandable resin beads; and
discharging the expandable resin beads together with the dispersing medium from the closed vessel to a low pressure area which is lower than the pressure in the closed vessel.

7. A molded article of polyvinylidene fluoride resin expanded beads, being obtainable by molding of the polyvinylidene fluoride resin expanded beads according to claims 1 to 5.

## Patentansprüche

1. Geschäumte Polyvinylidenfluoridharzkügelchen, umfassend ein Polyvinylidenfluoridharz als ein Basisharz, wobei ein Elastizitätsmodul des Polyvinylidenfluoridharzes, welcher gemäß JIS K 7171 gemessen wird, 450 MPa oder mehr beträgt, eine Schmelzflussrate (MFR) des Polyvinylidenfluoridharzes 1 g/10 min oder mehr beträgt bei 230°C und 2,16 kg Last basierend auf ASTM D 1238, eine Rohdichte der geschäumten Kügelchen 25 bis 150 g/L beträgt, und ein Anteil geschlossener Zellen der geschäumten Kügelchen 80 % oder mehr beträgt (ASTM-D-2856-70).

2. Geschäumte Polyvinylidenfluoridharzkügelchen nach Anspruch 1, wobei eine DSC-Kurve, welche gemessen wird, wenn die geschäumten Kügelchen von 30°C auf 200°C aufgeheizt werden bei einer Aufheizrate von 10°C/min mittels Wärmestromdifferentialrasterkalorimetrie (eine DSC-Kurve des ersten Aufheizens), eine kristalline Struktur aufweist, bei welcher ein endothermer Peak, der dem Polyvinylidenfluoridharz inhärent ist (inhärenter Peak), und ein oder mehrere endotherme Peaks (Hochtemperaturpeaks) auf der Seite der höheren Temperatur als der inhärente Peak erscheinen, und wobei die DSC-Kurve des ersten Aufheizens die Bedingung der folgenden Formel (1) erfüllt,

$$0,05 \leq Eh / Et \leq 0,25 \ldots (1)$$

(In der Formel steht Et für einen Gesamtwärmewert (J/g) der endothermen Peaks des inhärenten Peaks und des Hochtemperaturpeaks auf der DSC-Kurve des ersten Aufheizens, und Eh steht für einen Wärmewert (J/g) der Hochtemperaturpeaks.)

3. Geschäumte Polyvinylidenfluoridharzkügelchen nach Anspruch 1, wobei der Elastizitätsmodul des Polyvinylidenfluoridharzes 500 bis 1200 MPa beträgt.

4. Geschäumte Polyvinylidenfluoridharzkügelchen nach Anspruch 1, wobei die Schmelzflussrate des Polyvinylidenfluoridharzes 1,5 bis 15 g/10 min beträgt bei 230 °C und 2,16 kg Last.

5. Geschäumte Polyvinylidenfluoridharzkügelchen nach Anspruch 2, wobei der Wärmewert der Hochtemperaturpeaks 2 bis 30 J/g beträgt.

6. Verfahren zur Herstellung von geschäumten Polyvinylidenfluoridharzkügelchen mit einer Rohdichte von 25 bis 150 g/L und mit einem Anteil von 80% oder mehr an geschlossenen Zellen, umfassend: Dispergieren von Harzkügelchen, welche als ein Basisharz ein Polyvinylidenfluoridharz enthalten mit einem Elastizitätsmodul von 450 MPa oder mehr und einer Schmelzflussrate (MFR) von 1 g/10 min oder mehr bei 230°C und 2,16 kg Last, in einem Dispersionsmedium in einem geschlossenen Behälter und Aufheizen der Harzkügelchen; Imprägnieren der Harzkügelchen mit einem Treibmittel unter Druck, um schäumbare Harzkügelchen zu erhalten; und Austragen der schäumbaren Harzkügelchen zusammen mit dem Dispersionsmedium aus dem geschlossenen Behälter in einen Bereich niedrigen Drucks, welcher niedriger ist als der Druck in dem geschlossenen Behälter.

7. Formteil aus geschäumten Polyvinylidenfluoridharzkügelchen, erhältlich durch Formen der geschäumten Polyvinylidenfluoridharzkügelchen nach den Ansprüchen 1 bis 5.

**Revendications**

1. Billes expansées de résine de polyfluorure de vinylidène comprenant une résine de polyfluorure de vinylidène en tant que résine de base, dans lesquelles :

un module de torsion de la résine de polyfluorure de vinylidène mesuré selon JIS K 7171 est de 450 MPa ou plus, un indice de fluidité (MFR) de la résine de polyfluorure de vinylidène est 1 g/10 minutes ou plus à 230 °C et pour une charge de 2,16 kg en se basant sur ASTM D1238, une masse volumique apparente des billes expansées est de 25 à 150 g/La, et une teneur en cellules fermées des billes expansées est de 80 % ou plus (ASTM D2856-70).

2. Billes expansées de résine de polyfluorure de vinylidène selon la revendication 1, dans lesquelles une courbe DSC qui est mesurée lorsque les billes expansées sont chauffées de 30 °C à 200 °C à une vitesse de chauffage de 10 °C/minute par une calorimétrie à balayage différentiel à flux de chaleur (une courbe DSC du premier chauffage) a une structure cristalline dans laquelle un pic endothermique qui est inhérent à la résine de polyfluorure de vinylidène (pic inhérent) et un ou plusieurs pics endothermiques (pics de haute température) sur le côté température plus élevée que le pic inhérent apparaissent, et la courbe DSC du premier chauffage satisfait à la condition de la formule suivante (1) :

$$0,05 \leq Eh\ /\ Et \leq 0,25 \qquad \ldots\ (1)$$

(Dans la formule, Et représente une valeur énergétique totale (J/g) des pics endothermiques du pic inhérent et le pic de haute température sur la courbe DSC du premier chauffage, et Eh représente une valeur énergétique (J/g) des pics de température élevée.).

3. Billes expansées de résine de polyfluorure de vinylidène selon la revendication 1, dans lesquelles le module de torsion de la résine de polyfluorure de vinylidène est de 500 à 1 200 MPa.

4. Billes expansées de résine de polyfluorure de vinylidène selon la revendication 1, dans lesquelles l'indice de fluidité de la résine de polyfluorure de vinylidène est de 1,5 à 15 g/10 minutes à 230 °C et pour une charge de 2,16 kg.

5. Billes expansées de résine de polyfluorure de vinylidène selon la revendication 2, dans lesquelles la valeur énergétique des pics de température élevée est de 2 à 30 J/g.

6. Procédé pour produire des billes expansées de résine de polyfluorure de vinylidène ayant une masse volumique apparente de 25 à 150 g/L et une teneur en cellules fermées de 80 % ou plus comprenant :

la dispersion de billes de résine, qui incluent, en tant que résine de base, une résine de polyfluorure de vinylidène ayant un module de torsion de 450 MPa ou plus et un indice de fluidité (MFR) de 1 g/10 minutes ou plus à 230 °C et pour une charge de 2,16 kg, dans un milieu de dispersion dans un récipient fermé et en chauffant les billes de résine ;
l'imprégnation des billes de résine avec un agent d'expansion sous pression pour obtenir des billes de résine pouvant être expansées ; et
la décharge des billes de résine pouvant être expansées en même temps que le milieu de dispersion depuis le récipient fermé jusqu'à une zone de basse pression qui est inférieure à la pression dans le récipient fermé.

7.  Article moulé de billes expansées de résine de polyfluorure de vinylidène, que l'on peut obtenir en moulant des billes expansées de résine de polyfluorure de vinylidène selon les revendications 1 à 5.

Fig.1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7011037 A
- JP 7026051 A
- JP 2010209224 A
- JP 4046217 B
- JP 6049795 B
- JP 9104026 A
- JP 9104027 A
- JP 10180888 A